# EUROPEAN PATENT SPECIFICATION

(11) **EP 1 543 068 B1**
(45) Date of publication and mention of the grant of the patent: **03.10.2007**
(21) Application number: 03785039.3
(22) Date of filing: 06.08.2003
(51) Int. Cl.: C08J 7/04, C08G 18/80, C09D 175/04

(54) **ONE-PACK PRIMER SEALER COMPOSITIONS FOR SMC AUTOMOTIVE BODY PANELS**
EINKOMPONENTIGE PRIMER-SEALER-ZUSAMMENSETZUNGEN FÜR SMC-AUTOKAROSSERIETEILE
COMPOSITIONS D'APPRET D'IMPRESSION MONOCOMPOSANT POUR PANNEAUX DE CARROSSERIE AUTOMOBILES SMC

(30) Priority: 07.08.2002 US 401823 P
(43) Date of publication of application: 22.06.2005
(73) Proprietor: E.I. DU PONT DE NEMOURS AND COMPANY, Wilmington, Delaware 19898 (US)
(72) Inventor: HAZAN, Isidor, Miami Beach, Florida 33139 (US); PAQUET, Donald, A., Jr., Troy, MI 48085 (US); STRICKLAND, Debra, S., Rochester, MI 48307 (US); UHLIANUK, Peter, William, Romeo, MI 48065 (US); MATHESON, Robert, R., West Bloomfield, MI 48322 (US)
(74) Representative: Morf, Jan Stefan
(86) International application number: PCT/US2003/024850
(87) International publication number: WO 2004/014991

(56) References cited:
- WO-A-00/55229
- WO-A-99/40140
- US-A- 5 250 605
- DATABASE WPI Week 199925 Derwent Publications Ltd., London, GB; AN 1999-296408 XP002261743 & JP 11 100237 A (NITTO BOSEKI) 13 April 1999 (1999-04-13)

## Description

### Background of the Invention

The present invention relates to primer sealer compositions suited for sealing SMC (sheet molding compound) and other molded thermoset plastic parts and more particularly to one-pack primer sealer compositions for SMC automotive body panels that provide significantly reduced paint defects (such as paint pop and cracking defects) in the sealing and automotive OEM finishing operations.

Sheet molding compound (SMC) has gained widespread use in the automotive industry as a molding compound for exterior vehicle parts, due to its ability to deliver all of the structural properties of metal, while introducing other advantages such as lower vehicle body weight, lower tooling costs and an increase in vehicle part styling freedom and its inherent corrosion resistance. Nowadays, SMC is widely used for high-volume moldings of large, rigid, exterior automotive body panels such as hoods, fenders, and grills. In such applications, SMC can deliver the advantages of plastic while concealing from an observer that the panel is a form of plastic because of its rigid strength and its steel-like surface quality. SMC can also be processed easily through assembly lines that handle steel because it can run through the traditional electrodeposition process and withstand the topcoat bake temperatures encountered in the Original Equipment Manufacturer (OEM) process.

One difficulty with SMC as well as other molded fiber reinforced thermoset plastics is its surface porosity. When parts made from these plastics are coated with subsequently applied automotive coatings, defects called pops result in the paint. These defects are caused by evolution of gases trapped in the porous substrate during the oven cure cycles of the subsequently applied coating layers. These defects usually show up after the first application of automotive primer and result in extensive reworking and repainting of the part. Attempts have been made to eliminate the problem by applying SMC sealers to the part at the molding plant before the part is shipped and attached to the unpainted vehicle frame at the auto assembly plant. Most liquid SMC sealers in use nowadays, for example, one-pack melamine and two-pack isocyanate systems, are very brittle and while they may reduce some porosity popping, they are easily damaged and cracked during post stress operations at the OEM assembly plant, and popping defects are still observed.

Therefore, a continuing need still exists for a primer sealer composition for molded SMC parts that exhibits lower paint defects at both the sealing and OEM finishing operations and eliminates extensive reworking and repainting of the part.

### Summary of the Invention

The present invention is directed to a one-pack type primer sealer composition for SMC and other molded thermoset plastic parts, containing a film forming binder and an organic liquid carrier, wherein the binder comprises:
(a) from about 10-85% by weight, based on the weight of the binder, of a low molecular weight silane functional compound with a hydrolyzable group and at least one additional functional group (urea, urethane and/or hydroxyl) that is capable of reacting with component (d);
(b) from about 0-70% by weight, based on the weight of binder, of low molecular weight polyol compound or polymer,
(c) from about 0-15% by weight, based on the weight of the binder, of a silane coupling agent;
(d) from about 15-90% by weight, based on the weight of binder, of melamine formaldehyde crosslinking agent.

Optionally, the composition further includes one or more dispersed particles with at least one functional group (urea, urethane, silane or hydroxyl) capable of reacting with (a) or (d), preferably 0 to 10% by weight, based on the weight of binder, to minimize cracking.

The claimed invention further includes processes for sealing molded SMC and other plastic parts, particularly auto parts, with the forgoing composition and molded SMC and other plastic parts coated/sealed therewith.

The present invention significantly reduces paint defects at both the sealing and OEM finishing operations and eliminates extensive reworking and repainting of the part at the auto assembly plant.

It is believed that the paint defects are reduced by providing a coating based on reactive silane components that: (1) offer enhanced sealing abilities on SMC, due to the ability of silane compounds to wet out and flow over hydrophilic fiberglass and calcium carbonate fillers in the SMC and seal pores; (2) are formulated with highly flexible resins to withstand stress induced cracking during OEM finishing operations; and (3) have a gradual cure profile characteristic of silane containing coatings which is also beneficial over SMC, as gradual cure allows tapped gases to escape early in the oven cure cycle, without interfering with film formation and formation of good barrier properties.

As used herein:
"One-pack" coating composition means a thermoset coating composition containing reactive components that are stored in the same container but are unreactive during storage.
"Primer sealer", also referred herein as a "SMC primer" or "SMC sealer", means a thermoset coating composition that forms a primer coating on the substrate that has the ability to seal porosity on the surface of the substrate by preventing gases from causing imperfections such as fissures or pops in the primer sealer film.
"SMC" means a sheet molding compound. It is the plastic material most commonly used in the compression molding of plastic automotive body panels and other rigid automotive parts. SMC is a compound composed generally of polyester resin, fillers, catalysts, chopped glass fibers, release agents and a low profile additive that expands during the curing reaction. SMC has been described in various patents including.U.S. Pat. Nos. 3,577,478, 3,548,030 and 3,466,259.

A "pop defect" is a sharp-edged circle in the cured coating often about 1 mm in size caused by gases escaping from or through the film during curing. Typically a pop develops during baking when paint forms a skin before all vapors are expelled. Trapped gases rupture the surface skin as they exit the film, forming the defect. Visually a pop appears as a volcano in appearance, however if it occurs early enough for some reflow to occur it may appear as a pinhole and if the surface of the coating has attained sufficient strength the gases may not be able to penetrate the film and in this case will form a bubble or bulge on the coating surface.

### Detailed Description of the Preferred Embodiments

To eliminate the paint pop defects caused by substrate defects, it is desired to have a primer sealer coating that has the ability to seal and not have paint pops itself. In addition to being a good sealer, primers for automotive SMC application are typically conductive for following electrostatic coating processes at the assembly plant. These primers must also be able to withstand the high temperatures encountered in the OEM finishing process without any degradation, ensure strong adhesion both to the substrate and to latter OEM primers (after E-coat), must remain flexible enough to meet the physical stress exerted on the film during OEM assembly and painting operations without cracking and also flexible enough to meet chip requirements of the painted part. The present inventors have discovered a coating composition that offers the forgoing properties, without sacrificing processability and sprayability.

Preferably, the coating composition of the present invention is formulated as a high solids composition. By "high solids composition", it is meant having a relatively high binder solids content in the range of from 50 to 100 percent by weight, based on the total weight of the composition.

The film-forming portion of the present composition is referred to as the "binder" or "binder solids" and is dissolved, emulsified or otherwise dispersed in an organic solvent or liquid carrier. The binder generally includes all the normally solid compounds or polymeric non-liquid components of the composition. Generally, catalysts, pigments, or chemical additives such as stabilizers are not considered part of the binder solids. Non-binder solids other than pigments usually do not amount to more than about 5% by weight of the composition. In this disclosure, the term binder includes the silane functional compound, the melamine crosslinking agent, and all other optional compounds or polymeric film-forming ingredients.

The coating composition of the present invention includes both silane and melamine components in the binder. The silane component of the coating composition includes a silane functional compound with at least one hydrolyzable group (alkoxy group) on the silane group and at least one additional functional group (urea, urethane and/or hydroxyl) that is capable of reacting with the melamine crosslinking component. Among the hydrolyzable groups alkoxy groups such as methoxy group and ethoxy group are preferable because of the mild hydrolyzability thereof. The coating composition includes in the range of from 10 to 85%, preferably in the range of from 10 to 40%, and most preferably in the range of from 15 to 35% of the silane component, the percentages being in weight percentages based on the total weight of binder solids.

It is generally preferable that the silane component used herein have a weight average molecular weight not exceeding 5,500, more preferably in the range of about 179 to 4,500 and most preferably in the range of about 250 to 3,500. All molecular weights disclosed herein are determined by gel permeation chromatography (GPC) using a polystyrene standard.

Such silane functional components may be prepared by a variety of techniques. For example, the compound may be conventionally polymerized from ethylenically unsaturated silane containing monomers, along with suitable ethylenically unsaturated hydroxy containing monomers and/or urethane/isocyanate functional monomers to produce either a hydroxy containing silane oligomer, an urethane containing silane oligomer, and/or an isocyanate containing silane oligomer. The isocyanate functional groups if any may then be further reacted with a hydroxy functional material to make a urethane containing silane oligomer. The reaction conditions should be chosen so that 100% of the isocyanate groups are reacted, or as close to 100% as can be reasonably achieved, so that essentially no free isocyanate groups (which are highly reactive with the other binder components) remain, since it is desired to store together all binder components in the same container and provide a one-pack composition.

A suitable silane containing monomer useful in forming the silane oligomer cited above is an alkoxysilane having the following structural formula: 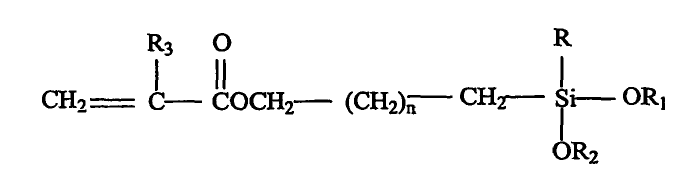 wherein R is either CH₃, CH₃ CH₂, CH₃O, or CH₃CH₂O, CH₃OCH₂CH₂O; R₁ and R₂ are CH₃, CH₃ CH₂, or CH₃OCH₂CH₂; and R₃ is either H, CH₃, or CH₃ CH₂; and n is 0 or a positive integer from 1 to 10, preferably from 1 to 4. Preferably, R is CH₃O or CH₃ CH₂O and n is 3.

Typical examples of such alkoxysilanes are the acrylatoalkoxy silanes, such as gamma-acryloxypropyltrimethoxy silane and the methacrylatoalkoxy silanes, such as gamma-methacryloxypropyltrimethoxy silane, and gamma-methacryloxypropyltris(2-methoxyethoxy) silane.

Other suitable alkoxy silane monomers have the following structural formula: 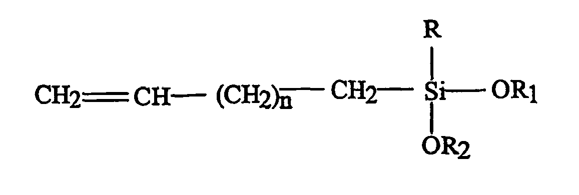 wherein R, R₁ and R₂ are as described above and n is a positive integer from 1 to 10, preferably from 1 to 4. Examples of such alkoxysilanes are the vinylalkoxy silanes, such as vinyltrimethoxy silane, vinyltriethoxy silane and vinyltris(2-methoxyethoxy) silane.

Other suitable silane containing monomers are acyloxysilanes, including acrylatoxy silane, methacrylatoxy silane and vinylacetoxy silanes, such as vinylmethyldiacetoxy silane, acrylatopropyltriacetoxy silane, and methacrylatopropyltriacetoxy silane. It is understood that combinations of the above-mentioned silane containing monomers are also suitable.

Suitable hydroxy containing monomers which can be used to place reactive hydroxy groups on the silane compound include hydroxy alkyl acrylates or methacrylates having 1-8 carbon atoms in the alkyl group, for example, hydroxyethyl acrylate, hydroxypropyl acrylate, hydroxybutyl acrylate, hydroxyethyl methacrylate, hydroxypropyl methacrylate, hydroxybutyl methacrylate and the like. Suitable isocyanate containing monomers which may be used to place isocyanate/urethane functional groups on the silane compound include 2-isocyanato-ethyl methacrylate, α, α-dimethyl, meta-isopropenyl benzyl isocyanate and the like.

Other non-silane containing monomers can also be used for the purpose of achieving the desired properties such as hardness/flexibility and adhesion. Suitable ethylenically unsaturated non-silane containing monomers are alkyl acrylates, alkyl methacrylates and any mixtures thereof, where the alkyl groups have 1 to 12 carbon atoms, preferably 3 to 8 carbon atoms.
Suitable alkyl methacrylate monomers that can be used include methyl methacrylate, ethyl methacrylate, propyl methacrylate, butyl methacrylate, isobutyl methacrylate, pentyl methacrylate, hexyl methacrylate, octyl methacrylate, nonyl methacrylate, and lauryl methacrylate. Similarly, suitable alkyl acrylate momomers include methyl acrylate, ethyl acrylate, propyl acrylate, butyl acrylate, isobutyl acrylate, pentyl acrylate, hexyl acrylate, octyl acrylate, nonyl acrylate, and lauryl acrylate. Cycloaliphatic methacrylates and acrylates also can be used, for example, such as trimethylcyclohlexyl methacrylate, trimethylcyclohexyl acrylate, isobornyl methacrylate, isobornyl acrylate, t-butyl cyclohexyl acrylate, or t-butyl cyclohexyl methacrylate. Aryl acrylate and aryl methacrylates, such as, for example, benzyl acrylate and benzyl methacrylate can be also used. It is understood that combinations of the foregoing monomers are also suitable.

In addition to alkyl acrylates or methacrylates, other polymerizable non-silane-containing monomers, up to about 50% by weight of the compound, can be used in the silane compound for the purpose of achieving the desired properties. Exemplary of such other monomers are styrene, methyl styrene, acrylamide, acrylonitrile and methacrylonitrile.

Another type of silane compound that can be used in the present invention is, for example, the reaction product of a silane containing compound, having a reactive group such as epoxide or isocyanate, for example, 3-glycidylpropyl trimethoxysilane or isocyanatopropyl triethoxysilane, with a non-silane containing compound having a reactive group, typically a hydroxyl or an epoxide group, that is co-reactive with the silane. An example of a useful compound is the reaction product of a polyol and an isocyanatoalkyl alkoxysilane such as isocyanatopropyl triethoxysilane.

Urea containing silane compounds can also be used in the present invention. Urea functionality can be readily obtained by one skilled in the art by reacting an isocyanate containing silane compound with an amine or polyamine or by reacting an amine containing silane compound with an isocyanate or polyisocyanate.

Still another suitable silane compound that can be used in the present invention is to react an amine containing silane compound with a substance reactive with said amine functionality. The preferred method for preparing such a silane compound is by first reacting an amino containing silane monomers with a cyclic carbonate to make a hydroxy urethane adduct. This adduct can be used as is or further reacted with an isocyanate or polyisocyanate to produce a silane polyurethane compound. Typical of such aforementioned silane containing polyurethane compounds are those having the following structural formula: 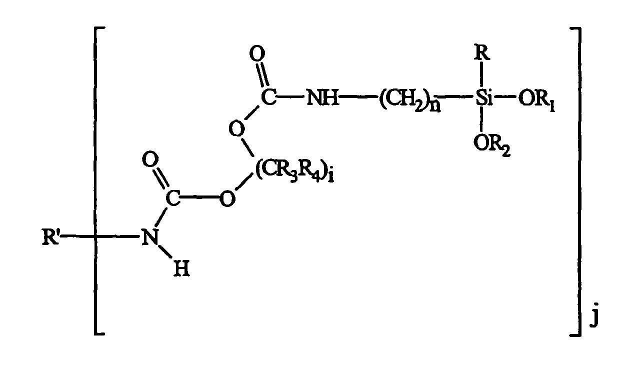 where R is either CH₃, CH₃ CH₂, CH₃O, or CH₃CH₂O, CH₃OCH₂CH₂O; R₁ and R₂ are CH₃, CH₃ CH₂, or CH₃OCH₂CH₂; and n is 0 or a positive integer from 1 to 10, preferably from 1 to 4 (preferably, R is CH₃O or CH₃ CH₂O and n is 3); R₃ and R₄ are independently H, C₁-C₅ alkyl, alkoxy groups, such as methoxyl, ethoxyl, phenoxyl, CH₂-OH, or a linked polymer structure and i is 2 or 3; and R' is a residue from an isocyanate (j=1) or a polyisocyanate (j>=1) compound.

Typical of the corresponding above-mentioned hydroxy urethane containing silane adducts are those having the following structural formula: 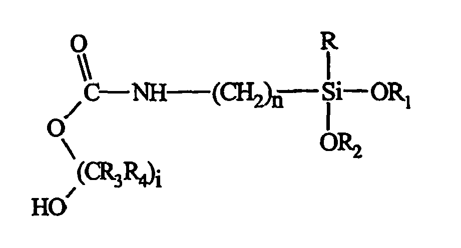 where R, R₁, R₂, R₃, R₄, i and n are as described above.

The reaction for forming both the hydroxy urethane adduct and the silated polyurethane is generally carried out at a reaction temperature in the range of from 20°C to 200°C, preferably in the range of from 40°C to 170°C, and more preferably in the range of from 50°C to 150°C. Typical reaction time is in the range of from 1 hours to 24 hours, preferably 2 to 8 hours. When the polyurethane is made, the foregoing two-step process ensures that the reactive urethane functionalities are uniformly distributed on each molecule chain of the silane oligomer. As with the other silated urethane compounds described above, the reaction conditions are preferably chosen so that no free isocyanate groups remain in the final oligomer.

Suitable amino-group containing silane compounds that can be used to form either the adduct or polyurethane include, for example, gamma-aminopropyltrimethoxysilane, gamma-aminopropyltriethoxysilane, gamma-aminopropyhnethyldimethoxysilane, N-(beta-aminoethyl)-gamma-aminopropyltrimethoxysilane, N-(beta.-aminoethyl)-gamma-aminopropyltriethoxysilane, N-(beta.-aminoethyl)-gamma.-aminopropyldimethoxysilane, and 1,3-diaminoisopropyltrimethoxysilane. However, the invention is not restricted thereto and use can be made therefore of amino group-containing silane compounds commonly employed in the art. Either one of these amino group-containing silane compounds or a mixture of two or more thereof may be used. The aminosilane compound most preferred in the present invention is gamma-aminopropyltrimethoxysilane. Suitable cyclic carbonate compounds useful in forming the above-mentioned silane oligomer include five membered or six member cyclic carbonates or a combination thereof. Six membered cyclic carbonates are preferred.

Some suitable cyclic carbonates that can be used to form the adduct or polyurethane include cyclic carbonates possessing one or more ring structures per molecule. The cyclic carbonate preferably contains between one to four rings, preferably one ring. Each ring may contain 3 or 4 carbon atoms, with or without pendant side groups. The carbonate component may contain a five-member or a six-member cyclic carbonate, or a combination thereof. Six-member cyclic carbonates are preferred.

Some of the suitable five member cyclic carbonates include those having the formula: 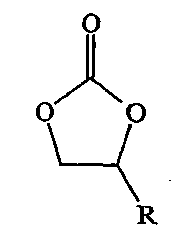 where R = H, C₁-C₁₅ alkyl, alkoxy groups, such as methoxyl; ethoxyl, phenoxyl, CH₂-OH, or a linked polymer structure, such as from polyurethane, polyester or acrylic polymer, all of low number average molecular weight in the range of from 200 to 10,000, preferably in the range of from 300 to 5000 and more preferably in the range of from 400 to 1000.

Five membered cyclic carbonates having 2 or more ring structures may be obtained as the reaction products of glycerin carbonate (R= CH₂-OH) with aliphatic diisocyanates or polyisocyanates, such as hexamethylene diisocyanate (HMDI), isophorone diisocyanate, nonane diisocyanate, or their biuret or isocyanurate trimers. Alternatively, a 5 membered cyclic carbonate having 2 or more cyclic carbonate ring structures may be prepared by conventional synthetic routes known within the industry which lead to polyester, polyether, or polyacrylics having such functional sites. Some of the suitable five membered cyclic carbonates include those having on average one ring structure, such as ethylene carbonate, propylene carbonate, butylene carbonate, glycerin carbonate, butyl linseed carbonate, or a combination thereof. Ethylene, propylene, and butylene carbonates are preferred.

Some the suitable six member cyclic carbonates include those having the formula: 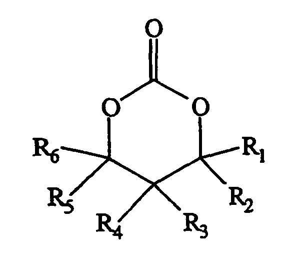 where R₁, R₂, R₃, R₄, R₅, and R₆, are independently H, C₁-C₁₅ alkyl, or alkoxyl group, such as methoxyl, ethoxyl, phenoxyl, or a linked polymer structure, such as from polyurethane, polyester or acrylic polymer, all of low number average molecular weight in the range of from 200 to 10,000, preferably in the range of from 300 to 5000 and more preferably in the range of from 400 to 1000.

Six membered cyclic carbonates having on average one or more ring structure include the reaction products of dialkyl carbonates or phosgene with any 1,3 diol, such as neopentyl glycol, 1,3 propane diol, 2-methyl,-2-propypl-1,3-propanediol, or trimetholylpropane. Examples of 6 membered ring cyclic carbonates, and their synthesis are described in Examples 1, 3 and 9 in U.S. Patent 4,440,937, which is incorporated herein by reference.

The present invention also includes use of six membered cyclic carbonates having on an average one or more cyclic carbonate ring structures which may be conventionally prepared by providing polyester, polyether, or polyacrylics with carbonate functionalities. Six membered cyclic carbonate functionalized polyurethanes prepared by reacting aliphatic diisocyanates or polyisocyanates with hydroxy functional carbonates, or by reacting multifunctional amines with multi ring containing cyclic carbonates are also suitable for use in the present invention.

Suitable isocyanates that can be used in the second step to form the polyurethane include any of the conventional aliphatic, cycloaliphatic, and aromatic isocyanates and polyisocyanates. Preferably, a polyisocyanate is used having on an average 2 to 6, preferably 2 to 4 and more preferably 2 isocyanate functionalities. Examples of suitable aliphatic or cycloaliphatic polyisocyanates include aliphatic or cycloaliphatic di-, tri- or tetra-isocyanates, which may or may not be ethylenically unsaturated, such as 1,2-propylene diisocyanate, trimethylene diisocyanate, tetramethylene diisocyanate, 2,3-butylene diisocyanate, hexamethylene diisocyanate, octamethylene diisocyanate, 2,2,4-trimethyl hexamethylene diisocyanate, 2,4,4-trimethyl hexamethylene diisocyanate, dodecamethylene diisocyanate, omega -dipropyl ether diisocyanate, 1,3-cyclopentane diisocyanate, 1,2-cyclohexane diisocyanate, 1,4-cyclohexane diisocyanate, isophorone diisocyanate, 4-methyl-1,3-diisocyanatocyclohexane, trans-vinylidene diisocyanate, dicyclohexylmethane-4,4'-diisocyanate, 3,3'-dimethyl-dicyclohexylmethane 4,4'-diisocyanate, meta-tetramethylxylylene diisocyanate, polyisocyanates having isocyanurate structural units such as the isocyanurate of hexamethylene diisocyanate and isocyanurate of isophorone diisocyanate, the adduct of 2 molecules of a diisocyanate, such as hexamethylene diisocyanate, uretidiones of hexamethylene diisocyanate, uretidiones of isophorone diisocyanate or isophorone diisocyanate, and a diol such as ethylene glycol, the adduct of 3 molecules of hexamethylene diisocyanate and 1 molecule of water (available under the trademark Desmodur^{®} N-3300 from Bayer Corporation, Pittsburgh, Pennsylvania).

Isocyanate functional adducts can also be used that are formed from an organic polyisocyanate and a polyol. One useful adduct is the reaction product of tetramethylxylidene diisocyanate and trimethylol propane and is sold under the tradename of Cythane® 3160.

Aromatic polyisocyanates can also be used, although aliphatic and cycloaliphatic polyisocyanates are generally preferred, since they have better weathering stability.

One particularly preferred silane functional compound contains the following constituents: about 15 to 25% by weight hexamethylene diisocyanate, about 30 to 60% by weight gamma-aminopropyltrimethoxysilane, and about 25 to 50% by weight propylene carbonate.

Another preferred silane functional compound, which is preferably used in conjunction with the above compound, contains the following constituents: about 50 to 70% by weight gamma-aminopropyltrimethoxysilane, and about 30 to 50% propylene carbonate.

The invention is not restricted to the silane compounds listed above and use can be made of other film-forming silane functional compounds commonly employed in the art. Also, either one of these silane compounds or a mixture of two or more thereof may be used.

The melamine component of the present coating composition includes monomeric or polymeric melamines or a combination thereof. Partially or fully alkylated (e.g., methylated, butylated, and/or isobutylated) monomeric or polymeric melamines are preferred. The coating composition includes in the range of from 15 to 90%, preferably in the range of from 15 to 35%, and most preferably in the range of from of 18 to 30% of the melamine, the percentages being in weight percentages based on the total weight of binder solids. Lower levels of melamine may have an advantage with regard to flexibility.

Many of the suitable melamines are supplied commercially. For example, any of the conventionally known monomeric or polymeric alkylated melamine formaldehyde resins that are partially or fully alkylated can be used. One preferred crosslinking agent is a methylated and butylated or isobutylated melamine formaldehyde resin that has a degree of polymerization of about 1-3. Generally, this melamine formaldehyde resin contains about 50% butylated groups or isobutylated groups and 50% methylated groups. Another preferred melamine formaldehyde resin is a fully butylated resin containing 100% butylated groups. Such crosslinking agents typically have a weight average molecular weight of about 500-1,500. Examples of commercially available resins are Cymel^{®} 1168 (degree of polymerization 1.6, 50% methyl and 50% iso-butyl), Cymel^{®} 1161 (degree of polymerization 1.4,75% methyl and 25% iso-butyl), Cymel^{®} 1156 (degree of polymerization 2.9, 100% butyl), and Cymel^{®} 1158 (degree of polymerization 2.7, butyl and high imino), all of which are supplied by . Cytec Industries, Inc., West Patterson, New Jersey. A preferred melamine, for a good balance of properties, is a fully butylated resin such as Cymel^{®} 1156. Other possible crosslinking agents are urea formaldehyde, benzoquanamine formaldeyde and blocked or unblocked polyisocyanates.

Optionally, but preferably, the present coating composition includes a silane coupling agent having a reactive silane group in its molecule and is different from component (a) mentioned previously. The silane coupling agent used herein is provided to wet the substrate, promote adhesion, and slow down the cure rate of the coating to enable trapped gases in the porous substrate to release before the crosslink network is finalized. The coating composition includes in the range of from 0 to 15%, preferably in the range of from 0 to 5%, and most preferably in the range of from 1 to 4% of the silane coupling agent, the percentages being in weight percentages based on the total weight of binder solids.

It is also generally preferred that the silane coupling agent used herein have in its molecule other reactive group(s) so that it might undergo some interactions with other components of the one-pack type coating composition and the substrate. It is also preferable that this compound have a relatively low weight average molecular weight of 1,000 or less so that it might exert some favorable effects on the adhesion at the substrate coating interface. As such a compound, use can be made of those which are commonly employed as silane coupling agents.

Particular examples of the silane coupling agents include amino group-containing silane compounds; epoxy group-containing silane compounds; mercapto group-containing silanes; vinyl-type unsaturated group-containing silanes; chlorine atom-containing silanes; isocyanate group-containing silanes; and hydrosilanes, though the invention is not restricted thereto.

Among these compounds, an amino group-containing silane compound is preferable from the viewpoint of imparting the above characteristics. The amino group-containing silane compound may be an arbitrary one so long as it carries amino group and reactive silane group in its molecule. Particular examples thereof include gamma-aminopropyltrimethoxysilane, gamma-aminopropyltriethoxysilane, gamma-aminopropylmethyldimethoxysilane, N-(beta-aminoethyl)-gamma-aminopropyltrimethoxysilane, N-(beta.-aminoethyl)-gamma-aminopropyltriethoxysilane, N-(beta.-aminoethyl)-gamma.-aminopropyldimethoxysilane, 1,3-diaminoisopropyltrimethoxysilane, N-(n-butyl)-3-aminopropyltrimethoxysilane (Dynasylan^{®} 1189 from Degussa) and 3-ethylamino-2-methylpropyltrimethoxysilane (Silquest^{®} A-Link 15 Silane from Crompton Corp., Greenwich, Connecticut). However, the invention is not restricted thereto and use can be made therefor of amino group-containing silane compounds commonly employed in the art. Either one of these amino group-containing silane compounds or a mixture of two or more thereof may be used.

Among the amino group-containing silane compounds as cited above, it is particularly preferable from the viewpoint of availability to use one having one secondary amino group. However, the invention is not restricted thereto and use can be made therefor of amino group-containing silane compounds commonly employed in the art.

The silane coupling agent most preferred in the present invention is a bis (3-trimethoxysilyl propyl) amine (Silquest^{®} A-1170 from Crompton Corp.) in particular.

Optionally, the present coating composition may further include, particularly in conjunction with the melamine component, a low molecular weight film-forming polyol compound or polymer. It is generally preferable that this compound have a relatively low weight average molecular weight of 3,500 or less so that it might exert some favorable effects on wetting of the substrate. The coating composition includes in the range of from 0 to 70%, preferably in the range of from 20 to 60%, and most preferably in the range of from 30 to 50% of the polyol, the percentages being in weight percentages based on the total weight of binder solids.

Suitable polyols include acrylics, polyesters, acrylourethanes, polyester urethanes, polyurethane polyesters, polyurethanes, polyester urethane silanes, polyethers, or other polyol compounds (such as glycols), or combinations thereof. Graft polymers of different hydroxy containing resins are also suitable. Such a polyol suitably has a hydroxyl number of about 10-200, preferably 60-140.

A suitable polyol is a polyester or polyester urethane copolymer thereof having a hydroxy number of about 10 to 200 and a weight average molecular weight of about 1,000-3,000. Preferably the Tg (glass transition temperature) is below 20°C, preferably below 0°C. Such copolymers are well known to those skilled in the art and the particular monomer make-up can be selected to achieve the desired properties for a particular application, for example, depending on whether increased flexibility or increased toughness is desired

Examples of polyesters which may be employed in this invention are suitably prepared from linear or branched chain diols, including ether glycols, or mixtures thereof or mixtures of diols and triols, containing up to and including 8 carbon atoms, in combination with a dicarboxylic acid, or anhydride thereof, or a mixture of dicarboxylic acids or anhydrides, which acids or anhydrides contain up to and including 12 carbon atoms, wherein at least 75% by weight, based on the weight of dicarboxylic acid, is an aliphatic dicarboxylic acid.

Representative saturated and unsaturated polyols that may be reacted to form a polyester include alkylene glycols such as neopentyl glycol, ethylene glycol, propylene glycol, butane diol, pentane diol, 1,6-hexane diol, 2,2-dimethyl-1,3-dioxolane-4-methanol, 4-cyclohexane dimethanol, 2,2-dimethyl 1,3-propanediol, 2,2-bis(hydroxymethyl)propionic acid, and 3-mercapto-1,2-propane diol. Neopentyl glycol is preferred to form a flexible polyester or polyurethane that is soluble in conventional solvents.

Polyhydric alcohols, having at least three hydroxyl groups, may also be included to introduce branching in the polyester. Typical polyhydric alcohols are trimethylol propane, trimethylol ethane, pentaerythritol, glycerin and the like. Trimethylol propane is preferred, in forming a branched polyester.

The carboxylic acids include the saturated and unsaturated polycarboxylic acids and the derivatives thereof. Aliphatic dicarboxylic acids that can be used to form the polyester are as follows: adipic acid, sebacic acid, succinic acid, azelaic acid, dodecanedioic acid and the like. Preferred dicarboxylic acids are a combination of dodecandioic acid and azelaic acid. Aromatic polycarboxylic acids include phthalic acid, isophthalic acid, terephthalic acid, and the like. Cycloaliphatic polycarboxylic acids can also be used such as tetrahydrophthalic acid, hexahydrophthalic acid, cyclohexanedicarboxylic acid and 4-methylhexahydrophthalic acid. Anhydrides may also be used, for example, maleic anhydride, phthalic anhydride, trimellitic anhydride, and the like.

Examples of polyester urethanes that can be used are the reaction product of a hydroxyl terminated polyester, as described above, and a polyisocyanate, preferably, an aliphatic or cycloaliphatic diisocyanate and any of the polyiscoayantes listed above for use in the silane component may also be used in the polyester urethane.

The polyester may be prepared by conventional techniques in which the component polyols and carboxylic acids and solvent are esterified at about 110°-250°C for about 1-10 hours to form a polyester. To form the polyester urethane, a polyisocyanate may then be added and reacted at about 100°-200°C. for about 15 minutes to 2 hours.

In preparing the polyester, an esterification catalyst is typically used. Conventional catalysts include benzyl trimethyl ammonium bydroxide, tetramethyl ammonium chloride, organic tin compounds, such as dibutyl tin diaurate, dibutyl tin oxide stannous octoate and the like, and titanium complexes. About 0.1-4% by weight, based on the total weight of the polyester, of the catalyst is typically used. The aforementioned catalysts may also be used to form the polyester urethane.

The stoichiometry of the polyester preparation is controlled by the final hydroxyl number and by the need to obtain a product of low acid number; an acid number below 10 is preferable. The acid number is defined as the number of milligrams of potassium hydroxide needed to neutralize a 1 gram sample of the polyester. Additional information on the preparation of polyester urethanes is disclosed in U.S. Patent 4,810,759.

Chain extenders are also preferably used in the polyester or polyester urethane polyol component to increase flexibility of the coating film and enhance film flow and coalescence. Typically useful chain extenders are polyols such as polycaprolactone diols, such as Tone 200^{®} series available from Union Carbide/Dow Corporation. Caprolactones such epsilon-caprolactone may also be reacted with the polyols cited above for chain extension, as is well known in the art.

The invention is not restricted to the polyesters and polyester urethanes listed above and use can be made of other film-forming polyol compounds commonly employed in the art. Also, either one of these polyols or a mixture of two or more thereof may be used.

Another optional binder component in the coating composition of the present invention is one or more reactive dispersed particles (oligomer or polymer) with at least one functional group (such as silane or hydroxy group) that is capable of reacting with the silane and/or melamine component. The dispersed particle is provided to prevent cracking of the film which crosslinked silane coatings are otherwise prone.

Examples of dispersed particles include oligosilsesquioxanes, also referred to herein as silsesquioxanes. Such silsesquioxanes may suitably be present in the amount of 0 to 15% by weight, based on the weight of the binder, preferably about 1 to 10%, to improve the crack resistance of the resulting coating. Silsesquioxane compounds are oligomers that may be visualized as composed of tetracylosiloxane rings, for example as follows:

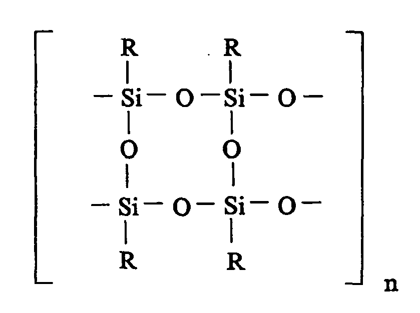

The number of repeating units is suitably 2 or more, preferably 2 to 12. Exemplary compounds, commercially available from Petrarch Systems, Inc. (Bristol, Pa.) include polymethylsilsesquioxane, polyphenylpropylsilsesquioxane, polyphenylsilsesquioxane, and polyphenylvinylsilsesquioxane.

Such silsesquioxanes have a plurality of consecutive SiO₃R- groups, forming SiO cages or "T" structures or ladders. The various rough geometries depend on the n in the above formula, which may vary from 2 to 12 or greater. These silsesquioxane compounds should have at least 1 hydroxy group, preferably at least 4. However, the greater the number of hydroxy groups, the greater the amount of crosslinking. Lower functionality is generally desired. A preferred polysilsesquioxane may be depicted as having the following structural formula:

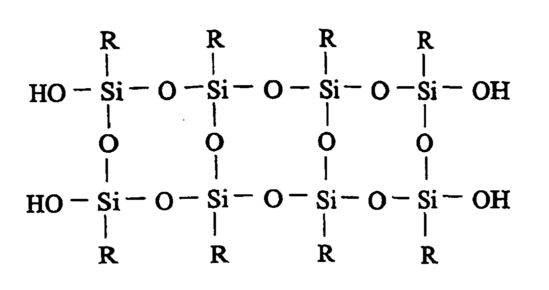

In the above formula, R is a substituted or unsubstituted alkyl, alkoxy or phenyl or combination thereof. Substituents include hydroxy, halo groups such as fluoro, and haloalkyl groups such as trifluoromethyl. As one example, in the above formula, R may consist of about 70 mole percent of phenyl and 30 mole percent propyl. Such a compound is commercially available as Z-6018 from Dow Coming. This compound has a weight average molecular weight of 1,600, 4 SiOH groups, and an OH equivalent weight of 330-360.

Dispersed polymer particles containing silane or hydroxy functionality, for crosslinking purposes, can also be used. These polymers are commonly referred to as NAD (non-aqueous dispersion) polymers. Suitable dispersed polymers for use in conjunction with silane polymers are disclosed in U.S. Patent 5,250,605, hereby incorporated by reference in its entirety. These dispersed polymers, like the silsesquioxanes cited above, are known to solve the problem of cracking heretofore associated with silane coatings.

A catalyst is typically added to the coating composition of the present invention to catalyze the crosslinking of the silane moieties of the silane component with itself and with other components of the composition. Typical of such catalysts are dibutyl tin dilaurate, dibutyl tin diacetate, dibutyl tin dioxide, dibutyl tin dioctoate, tin octoate, aluminum titanate, aluminum chelates, zirconium chelate and the like. Other catalysts useful for catalyzing silane bonding include the conventional acid catalysts, such as aromatic sulfonic acids, for example dodecylbenzene sulfonic acid, para-toluenesulfonic acid and dinonylnaphthalene sulfonic acid, all of which are either unblocked or blocked with an amine, such as dimethyl oxazolidine, 2-amino-2-methyl-1-propanol, n,n-dimethylethanolamine, n,n-diisopropanolamine, or a combination thereof. Other acid catalysts that can be used are strong acids, such as phosphoric and phosphonic acids which may be unblocked or blocked with an amine. Combinations of two or more of the above catalysts can also be used. Preferably, these catalysts are used in the amount of about 0.1 to 5.0%, more preferably about 0.1 to 2% by weight of the binder.

A suitable amount of water scavenger such as trimethyl orthoacetate, triethyl orthoformate, tetrasilicate and the like (0.1-15% by weight, preferably 2 to 10% by weight of binder) is typically added to the coating composition to react with water in the substrate cavities and further minimize popping defects. Water scavengers are also useful for extending shelf life of this moisture sensitive composition. About 3% microgel and 1% hydrophobic silica may be employed for rheology control. The composition may also include other conventional formulation additives such as UV stabilizers, toughening agents, and flow control agents, for example, such as Resiflow® S (polybutylacrylate), BYK® 320 and 325 (high molecular weight polyacrylates). Such additional additives will, of course, depend on the desired final properties of the coating composition.

Primer sealer coatings in the automotive industry are also generally conductive to permit subsequent electrostatic application of paint to the parts when attached to metal parts. Therefore, the composition of the present invention preferably includes at least one conductive pigment in an amount sufficient to impart conductivity to the coating film upon curing. Suitable conductive pigments for use herein include carbon black, graphite and mixtures of the two. Other pigments can also be included to adjust the final color and hiding of the coating.

Graphites suitable for use in the practice of the present invention may be either natural or synthetic, preferably synthetic. Examples of such graphites include M440, M450, M490, M850 and M890 (sold by Asbury Graphite Mills, Inc., Asbury, NJ). Graphites may have a mean particle size of about 1 micron to about 15 micron, preferably in the range of about 3 micron to about 9 micron. Graphites having mean particle size of 5 micron is most preferred. Compositions of the present invention include graphite to binder ratio of about 0/100 to 50/100, preferably between about 10/100 to about 30/100.

Carbon black is also preferably added to a composition of the present invention. Examples of carbon black suitable for the practice of the present invention include conductive grades such as Conductex^{®} 975 Ultra (sold by Columbian Chemical Company, Atlanta, GA), Printex^{®} XE-2 (sold by Degussa, Frankfurt, Republic of Germany), Black Pearls^{®} 2000 (sold by Cabot Corporation, Boston, MA). Compositions of the present invention generally include a carbon to binder ratio of about 0/100 to 6/100. More preferably the carbon black to binder ratio is in the range of about 0/100 to 4/100, most preferably 1/100 to 3/100.

Dispersants may be added to compositions of the present invention, in part, for purposes of dispersing graphite, carbon black and/or other pigments. Suitable dispersants used in the practice of the present invention include titanate esters such as Tyzor^{®} TE (sold by the Du Pont Company, Wilmington, DE), polymer dispersants such as AB polymer dispersants as described in U.S. Patent 4,656,226, or Disperbyk^{®} 161,162,170 (sold by Byk-Chemie, Wallingford, CT), comb dispersants such as Solsperse^{®} 24000 (Zeneca, Wilmington, DE), or combinations thereof.

Conductive coatings of the present invention are preferably gray in color and the blackness of a coating may be altered by the addition of TiO₂. Adding TiO₂ to conductive coatings lightens coating color. Adding colored organic or inorganic pigments to the conductive coating may form different coating colors. Extender pigments such as barium sulfate and/or talc may also be added to the compositions of the present invention.

It should be understood that the specific pigment to binder ratio can vary widely so long as it provides the requisite conductivity, barrier properties, color, and hiding at the desired film thickness and application solids.

The pigments can be introduced into the coating by first forming a mill base or pigment dispersion with any of the aforementioned polymers/oligomers used in the coating composition or with another compatible polymer or dispersant by conventional techniques, such as mixing/slurrying, high speed mixing, media milling, sand grinding, ball milling, attritor grinding or two/three roll milling. The pigment dispersion is then blended with the other constituents used in the coating composition.

The coating composition of the present invention, which is preferably formulated into high solids coating systems further contains at least one organic solvent typically selected from the group consisting of aliphatic or aromatic hydrocarbons such as petroleum naphtha or xylenes; ketones such as methyl amyl ketone, methyl isobutyl ketone, methyl ethyl ketone or acetone; alcohols such as methanol, isopropanol, or butanol; esters such as butyl acetate or hexyl acetate; glycol ethers such as ethylene glycol monethyl ether; glycol ether esters, such as propylene glycol monomethyl ether acetate and petroleum distillate cuts such as Aromatic 100, from Exxonmobil Chemical Co., Houston, Texas. The amount of organic solvent added depends upon the desired solids level as well as the desired amount of VOC of the composition. If desired, the organic solvent may be added to each component of the binder.

The coating composition of the present invention is preferably supplied as a one-pack coating composition in which all ingredients are mixed and stored together in the same container. The composition is preferably stored in a moisture-proof sealed container to prevent degradation during storage. The one-pack coating according to this invention thus obtained does not cure during the storage period. When it is taken out of the container and exposed to moisture in the atmosphere, it begins to cure from the surface. Of course, it may be formulated as a two-pack coating, although a one-pack composition is generally preferred.

The compositions of the present invention may be applied by conventional techniques such as spraying, electrostatic spraying, high rotational electrostatic bells and the like. The preferred techniques are air atomized spraying with or without electrostatic enhancement, and high speed rotational electrostatic bells, since these techniques are typically employed in a continuous paint application processes. After application, the composition is typically baked at 150-300°C, usually under gradual heating, for about 30-50 minutes to sufficiently degas the substrate and form a barrier coating about 0.1-2.0 mils thick.

Useful substrates that can be coated with the coating compositions of this invention include a variety of plastic substrates including molded fiberglass reinforced polyesters such as SMC, polyester reinforced fiberglass, reaction-injection molded urethanes, partially crystalline polyamides, and the like or mixtures thereof and their associated primers. Preferably, the substrates that are coated according to the process of the present invention are used as components to fabricate automotive vehicles, including but not limited to automobiles, trucks, and tractors. The substrates can have any shape, but are usually in the form of automotive body components such as bodies, hoods, doors, fenders, bumpers and/or trim for automotive vehicles. The substrate may also be appropriately degassed immediately prior to sealer application.

When the coating composition of this invention is used as a primer sealer in automotive applications, it is customary to first attach the sealed SMC part to the frame of the vehicle and then have the sealed SMC part travel on the vehicle through the standard e-coat tanks where only the steel parts on the vehicle get electrocoated with electrodeposition primers. The primer sealer is not sufficiently conductive to have the electrodeposition primers deposit thereon. Thereafter, primer surfacers are applied over the entire vehicle body exterior including over the sealed SMC part and then the SMC part along with the vehicle body are finished with a conventional automotive exterior monocoat, baseocat/clearcoat, or tricoat finish.

Upon curing of the coating composition of the present invention, the coating has excellent barrier properties and exhibits low paint defects at both the sealing and OEM finishing operations and can withstand cracking during OEM finishing which eliminates extensive reworking and repainting of the part.

The invention will now be illustrated in the following Examples. All parts and percentages are on a weight basis unless otherwise indicated.

### EXAMPLES

The following SMC sealer compositions according to the present invention were prepared and tested for barrier properties and post stress crack resistance.

### Example 1

### Preparation of Primer Sealer Composition

A primer sealer composition according to the present invention was prepared by blending together the following ingredients in the amounts given using the following procedure:

95.0 g reactive silane functional polyurethane component 1 (described in 1,A. below), 70.0 g Cymel^{®}1156 (alkylated melamime formaldehyde crosslinking) from Cytec Industries and 50.0 g of a conductive synthetic graphite (Asbury Graphite Mills grade 4934) were loaded into a container and mixed well (a Cowles blade was used but is not necessary). To this mixture was added 2.0 g of Resiflow^{®} S (Estron Chemical) (flow aid), 10.0 g n-butanol, 5.0 g trimethyl orthoacetate (Degussa Corp.), 180 g of a conductive carbon black dispersion (described in 1,E. below), 0.2 g Fascat^{®} 4202 (Atofina Chemicals) (dibutyl tin dilaurate catalyst), 8.5 g of a 33.6% solution of Nacure^{®} XP-221 (amine neutralized dodecylbenzene sulfonic acid catalyst) in methanol, 5.0 g Silquest^{®} A-1170 (silane coupling agent) from OSi Specialties, 10.0 g of a 75% solution of Z-6018 intermediate (Dow Corning) (low molecular weight hydroxy functional silicone (silsesquioxane) particulate), 25.0 g reactive silane functional component 2 (described in 1,C. below), and 140.0 g branched polyester (described in 1,D. below). After mixing well, the mixture was reduced (approximately 26%) to spray viscosity (30 sec in a Ford #4 cup) with a 50/50 blend of methyl amyl ketone and 2-ethyl hexanol.

The following premixes were used to prepare the primer sealer composition:

### A. Silane Functional Polyurethane Component 1

To a reactor fitted with heating mantle, stirrer and under nitrogen blanket, 2761.22 parts of g-aminopropyltrimethoxy silane (Silquest A1110 from Greenwich, Connecticut), 100 parts of ethyleneglycol monobutylether acetate (Butyl cellusolve acetate from Dow Chemical, Midland, MI) and 1650.957 parts of propylene carbonate (from Huntsman Corporation, Austin TX) were added and heated under agitation to 80C. The mixture was held at 80C for 4 hours. Then a mixture of 440 parts ethyleneglycol monobutylether acetate, three drops parts of dibutyltin dilaurate (Fascat 4202 catalyst from Atofina Chemicals, Philadelphia, Pennsylvania) and 1260 parts ofhexamethylene diisocyanate (Desmodur H, from Bayer Corporation, Pittsburgh, Pennsylvania) was added at a rate to keep the exotherm below 100°C (approximately 150 minutes). Then 100 parts ethyleneglycol monobutylether acetate was added and the reaction mixture held at 90-110°C for three hours. Then 250 parts of isopropyl alcohol was added as a shot and the reaction held for 60 minutes at 90°C at which point the isocyanate had been completely consumed as determined by the absence of the isocyanate absorbance at 2220 cm⁻¹ in the infrared spectrum. Then 1398.125 parts of cyclohexydimethylene/caprolactone adduct additive (described in 1,B. below) and 390 parts of ethyleneglycol monobutylether acetate were added and the resin cooled. The resulting silane functional polyurethane polymer/polyester blend had a solids content of 80% by weight.

### B. CHDM/Caprolactone Adduct Additive for Silated Urethane 1

To a reactor fitted with heating mantle, stirrer and under nitrogen blanket, 628.25 parts of 2-Oxepanone (Tone Monomer EC,HP from Dow Chemical, Midland MI) were charged. Then 264.55 parts of molten 1,4 cyclohexanedimethanol (CHDM-D from Eastman Chemical) were added. A shot 0.122 parts of dibutyltin dilaurate (Fascat 4202 catalyst from Atofina Chemicals) were added and 1.078 parts of xylene were then added and the reaction mixture heated to 125°C. The temperature was allowed to exotherm to 140°C and was then held at 140°C for four hours. The reaction mixture was then cooled to yield a hydroxyl containing polyester resin at 98% solids.

### C. Silane Functional Component 2

To a reactor fitted with heating mantle, stirrer, condenser, and under nitrogen blanket, 491.32 parts of g-aminopropyltrimethoxy silane (Silquest A1110 from Crompton Corp.) and 288.08 parts of propylene carbonate (from Huntsman Corporation, Austin TX) were added and heated under agitation to 120°C. The mixture was held at 120°C for 4 hours. Then 44.6 parts of n-butanol were added and the reaction mixture cooled. The resulting hydroxy functional silane oligomer had a solids content of 94% by weight

### D. Branched Polyester Polyol Resin

To a reactor with a heating mantle, stirrer, condenser and decanter, the following components were added in order with mixing at 50-80C: 200.18 parts of a 90% aqueous solution of neopentyl glycol, 53.96 parts of 1,6-hexanediol (BASF Corporation), 115.290 parts of trimethylolpropane, 94.580 parts of isophthalic acid, 294.63 parts of azelaic acid (Emerox^{®} 1144 azelaic acid from Cognis Corp), 63.64 parts of phthalic anhydride. The reaction mixture was heated to 240-250°C and water was removed by azeotropic distillation with xylene until the acid number was less than 5 mg KOH/g resin. Then 61.12 parts of xylene were added and the resin cooled. Thereafter 14.57 parts of toluene and 11.7 parts of xylene were added with mixing. Finally 76.98 parts of methyl ethyl ketone were added. The reactor product was a polyester resin of 80% solids.

### E. Conductive Carbon Black Dispersion

The carbon black dispersion was prepared by combining and mixing 26.57 weight percent of a polyester Resin (McWhorter 57-5789), 29.98 weight percent n-butyl propionate, 29.98 weight percent Aromatic 150, 9.18 gm AB block copolymer (glycidyl methacrylate/butyl methacrylate/methyl methacrylate described in U.S. Patent 4,656,226), and 4.3 weight percent of carbon black. The mixture was processed through a 2-liter Netzche LMZ media mill containing 0.6-0.8 mm zirconia media. Tip speed = 14 m/sec at flow-rate =14 sec/half-pint for 1 hour in a one tank recirculation process.

### Example 2

### Preparation of Primer Sealer Composition without Polyester

A polyester free primer sealer composition according to the present invention was prepared by repeating the procedure of Example 1 except the graphite was increased from 50g to 110g, the carbon black dispersion was removed, the branched polyester resin was removed and the silane functional polyurethane component 1 was replaced with the following silane functional polyurethane premix (0% polyester) (described in 2,A. below) and increased from 95g to 300g.

### A. Silane Functional Polyurethane (without polyester)

To a reactor fitted with heating mantle, stirrer and under nitrogen blanket, 1380.61 parts of g-aminopropyltrimethoxy silane (Silquest A1110 from Crompton Corp., Greenwich Connecticut), 50 parts of ethyleneglycol monobutylether acetate (Butyl cellusolve acetate from Dow Chemical, Midland, Michigan) and 825.48 parts of propylene carbonate (from Huntsman Corporation, Austin Texas) were added and heated under agitation to 80C. The mixture was held at 80°C for 4 hours. Then a mixture of 400 parts ethyleneglycol monobutylether acetate, two drops of dibutyltin dilaurate (Fascat 4202 catalyst from Atofina Chemicals, Philadelphia, Pennsylvania) and 646.8 parts of hexamethylene diisocyanate (Desmodur H, from Bayer Corporation, Pittsburgh, Pennsylvania) was added at a rate to keep the exotherm below 100°C (approximately 120 minutes). Then 50 parts ethyleneglycol monobutylether acetate was added and the reaction mixture held at 90-110°C for three hours. Then 137.5 parts of n-butanol was added and the reaction held for 60 minutes at 90°C at which point the isocyanate had been completely consumed as determined by the absence of the isocyanate absorbance at 2220 cm⁻¹ in the infrared spectrum. The resulting silane functional polyurethane had a solids content of 78% by weight.

### Example 3

### Evaluation of Primer Sealer Properties

The conductive primer-sealer (from Example 1) was spray-applied to 1.0 mil over three different types of commercial compression-molded SMC panels (2" wide by 18" long strips with a thickness of 0.1") which had been appropriately cleaned of dirt prior to sealer application. The panels were then flashed for 10 min at room temperature and then baked at 200°F for 17 min, followed by 240°F for 17 min, followed by 300°F for 17 min to simulate a real-world ramp bake profile. This was followed, after undergoing a stress procedure described below, by a 30 min 400°F bake to simulate the e-coat bake the SMC part would see in the OEM assembly plant.

Two commercially-available 1K melamine and two commercially-available 2K isocyanate gray solvent-based primer sealers that are used nowadays by the automotive industry were used for comparison in evaluation of pop performance of the silane primer-sealer described above. Each was spray-applied to 1.0 mil over SMC panels and baked under identical conditions as described above. These were similarly followed by stressing and a 30 min 400°F bake to simulate the e-coat bake the SMC part would see in the OEM assembly plant.

After panels were allowed to stand for 16 hours under ambient conditions, a commercial OEM gray primer-surfacer was spray-applied to 1.0 mil over each sealer described above and baked at 300°F for 30 min. Panels were then topcoated wet-on-wet with commercially-available high solids black basecoat and clearcoat (0.7 and 1.8 mils, respectively) and baked 30 min at 285°F.

Coatings were analyzed for resistance to pop defects under a post-stress condition, i.e., simulation of damage to SMC that would occur at the molder, in shipping, and at the OEM assembly plant after SMC primer application. To simulate post-stress conditions, each primed SMC panel was exposed to stressed by flexing before the e-coat bake simulation. Each panel was placed so that the back of the panel was in contact with an 8.25" cylindrical mandrel mandrel. Starting by holding one end of the strip to the mandrel in a tangent position, the other end was pulled to the center of the mandrel until the panel conformed to the circumference, held for five seconds, then released, allowing the specimen to return to a relaxed state.

The test panels were also subjected to humidification cycles to simulate part shipping and assembly in humid environments. Each panel received a sixteen hour humidity exposure (100% RH, 100°F) before sealer application. After the sealer was applied and baked, and the panel stressed, each panel received a second sixteen hour humidity exposure (80% RH, 77°F).

Three judges examined the sealed and topcoated SMC panels and tallied the pop counts at each stage. Each judge had considerable experience with, and knowledge of, paint defects that occur on plastic components.

The average number of pops observed in the topcoat layer for all three SMC substrates is shown in Table 1. No popping was observed after sealer application and bake as panels had not been subjected to any stress damage. However, subjecting these panels to the stress/humidity condition described above produces a significant amount of popping. The 2K products performed the worst. The increased rigidity (as measured from the Tg) and the higher cross-link density of the 2K products are believed to contribute to this characteristic. The data shows the silane product of this invention to outperform all of the commercial SMC sealers.

**Table 1 - Average Pop Results for all Substrates**

| Sealer Type | Average Number of Pops |
|---|---|
| 1K Melamine Primer A (Sherwin Williams AC601) | 190 |
| 1K Melamine Primer B (Redspot 2349) | 472 |
| 2K Isocyanate Primer C (Sherwin Williams AC2401) | 756 |
| 2K Isocyanate Primer D (Redspot 2560) | 428 |
| 1K Silane Primer (Example 1) | 91 |

On the whole, it has been found that the presence of silane compound in the sealer composition according to the present invention substantially improves the appearance of the coating with substantially comparable or better sealing during initial sealing operations and substantially better post stress pop resistance during subsequent finishing operations.

## Claims

1. A one-pack primer sealer composition for sheeting molding compounds, containing a film forming binder and an organic liquid carrier, wherein the binder comprises:
(a) from 10-85% by weight, based on the weight of the binder, of a silane functional oligomer with a hydrolyzable group and at least one additional functional group (urea, urethane and/or hydroxyl) that is capable of reacting with (d);
(b) from 0-70% by weight, based on the weight of binder, of low molecular weight polyol compound or polymer;
(c) from/40-15% by weight, based on the weight of the binder, of a silane coupling agent; and
(d) from 15-90%, based on the weight of binder, of melamine formaldehyde crosslinking agent.

2. The composition of claim 1 which further comprises a conductive pigment.

3. The composition of claim 2 wherein the conductive pigment is a mixture of graphite and carbon black.

4. The composition of claim 1, wherein the silane functional oligomer is a urethane or urea.

5. The composition of claim 4, wherein the oligomer is formed by first reacting an aminosilane monomer with a cyclic carbonate and then subsequently reacting the adduct formed with an isocyanate or polyisocyanate.

6. The composition of claim 1, wherein the silane functional oligomer has a weight average molecular weight in the range from 500-3,000.

7. The composition of claim 1, wherein the binder further comprises:
(e) from 0-10% of one or more dispersed particles with at least one functional group (urea, urethane, silane or hydroxyl) capable of reacting with (a) or (d).

8. The composition of claim 1 which further comprises an orthoacetate ester water scavenger.

9. The composition of claim 1, wherein the composition is at least 50% by weight binder solids.

10. A method of sealing a SMC substrate comprising:
applying a layer of a coating composition of claim 1 onto an SMC substrate; and
curing said layer into a sealed coating.

11. A plastic substrate coated with a dried and cured layer of the coating composition of claim 1.

12. The coated substrate of claim 11, wherein the substrate is a thermoset reinforced plastic article.

13. The coated substrate of claim 11, wherein the substrate is a molded SMC automotive body panel.

## Patentansprüche

1. Einkomponentige Grundierversieglerzusammensetzung für SMC-Harzmatten enthaltend ein Filmbildungsbindemittel und einen organischen flüssigen Träger, wobei das Bindemittel Folgendes umfasst:
(a) 10-85 Gew.-%, auf das Gewicht des Bindemittels bezogen, eines silanfunktionellen Oligomers mit einer hydrolysierbaren Gruppe und mindestens einer zusätzlichen funktionellen Gruppe (Harnstoff, Urethan und/oder Hydroxyl), die in der Lage ist, mit (d) zu reagieren;
(b) 0-70 Gew-%, auf das Gewicht des Bindemittels bezogen, niedermolekulare Polyolverbindung oder niedermolekulares Polymer;
(c) 0-15 Gew.-%, auf das Gewicht des Bindemittels bezogen, eines Silankopplungsmittels; und
(d) 15-90 %, auf das Gewicht des Bindemittels bezogen, Melaminformaledhyd-Vernetzungsmittel.

2. Zusammensetzung nach Anspruch 1, die des Weiteren ein leitfähiges Pigment umfasst.

3. Zusammensetzung nach Anspruch 2, wobei das leitfähige Pigment eine Mischung von Graphit und Ruß ist.

4. Zusammensetzung nach Anspruch 1, wobei das silanfunktionelle Oligomer ein Urethan oder Harnstoff ist.

5. Zusammensetzung nach Anspruch 4, wobei das Oligomer durch Reagieren zuerst eines Aminosilansmonomers mit einem cyclischen Carbonat und dann darauffolgend Reagieren des gebildeten Addukts mit einem Isocyanat oder Polyisocyanat gebildet wird.

6. Zusammensetzung nach Anspruch 1, wobei das silanfunktionelle Oligomer eine gewichtsdurchschnittliche Mohnasse im Bereich von 500-3.000 aufweist.

7. Zusammensetzung nach Anspruch 1, wobei das Bindemittel des Weiteren Folgendes umfasst:
(e) 0-10 % eines oder mehrerer dispergierter Teilchen mit mindestens einer funktionellen Gruppe (Harnstoff, Urethan, Silan oder Hydroxyl), die in der Lage ist, mit (a) oder (d) zu reagieren.

8. Zusammensetzung nach Anspruch 1, die des Weiteren einen Orthoacetatesterwasserfänger umfasst.

9. Zusammensetzung nach Anspruch 1, wobei die Zusammensetzung zu mindestens 50 Gew.-% aus Bindemittelfeststoffen besteht.

10. Methode zum Versiegeln eines SMC-Substrats umfassend:
das Aufbringen einer Schicht einer Beschichtungszusammensetzung nach Anspruch 1 auf ein SMC-Substrat; und
das Aushärten der Schicht zu einer versiegelten Beschichtung.

11. Kunststoffsubstrat, das mit einer getrockneten und ausgehärteten Schicht der Beschichtungszusammensetzung nach Anspruch 1 beschichtet ist.

12. Beschichtetes Substrat nach Anspruch 11, wobei das Substrat ein verstärkter Duroplastkunststoffartikel ist.

13. Beschichtetes Substrat nach Anspruch 11, wobei das Substrat ein geformtes SMC-Fahrzeugkarosserieteil ist.

## Revendications

1. Composition d'apprêt pour couche de fond à composant unique pour composés de moulage en feuille (Sheeting Molding Compounds : SMC) contenant un liant filmogène et un véhicule liquide organique, dans laquelle le liant comprend :
(a) 10 à 85 % en poids, par rapport au poids du liant, d'un oligomère à fonction silane avec un groupement hydrolysable et au moins un groupement fonctionnel supplémentaire (urée, uréthanne et/ou hydroxyle) qui est capable de réagir avec (d);
(b) 0 à 70 % en poids, par rapport au poids du liant, d'un composé ou d'un polymère de polyol de faible poids moléculaire ;
(c) 0 à 15 % en poids, par rapport au poids du liant, d'un agent de couplage de type silane ; et
(d) 15 à 90 %, par rapport au poids du liant, d'un agent de réticulation de mélamine-formaldéhyde.

2. Composition selon la revendication 1, qui comprend en outre un pigment conducteur.

3. Composition selon la revendication 2, dans laquelle le pigment conducteur est un mélange de graphite et de noir de carbone.

4. Composition selon la revendication 1, dans laquelle l'oligomère à fonction silane est un groupement uréthanne ou urée.

5. Composition selon la revendication 4, dans laquelle l'oligomère est formé en faisant d'abord réagir un monomère d'aminosilane avec un carbonate cyclique et en faisant ensuite réagir le produit d'addition formé avec un isocyanate ou un polyisocyanate.

6. Composition selon la revendication 1, dans laquelle l'oligomère à fonction silane a un poids moléculaire moyen en poids dans la plage de 500 à 3000.

7. Composition selon la revendication 1, dans laquelle le liant comprend en outre :
(e) 0 à 10 % d'une ou plusieurs particules dispersées avec au moins un groupement fonctionnel (urée, uréthanne, silane ou hydroxyle) capable de réagir avec (a) ou (d).

8. Composition selon la revendication 1, qui comprend en outre un fixateur d'eau de type ester orthoacétate.

9. Composition selon la revendication 1, dans laquelle la composition représente au moins 50 % en poids de solides de liant.

10. Procédé d'isolement d'un substrat SMC comprenant :
l'application d'une couche d'une composition de revêtement de la revendication 1 sur un substrat SMC ; et
le durcissement de ladite couche en un revêtement isolé.

11. Substrat de plastique revêtu d'une couche séchée et durcie de la composition de revêtement de la revendication 1.

12. Substrat revêtu selon la revendication 11, dans lequel le substrat est un article de plastique renforcé thermodurci.

13. Substrat revêtu selon la revendication 11, dans lequel le substrat est un panneau de carrosserie automobile SMC moulé.
